(19) Europäisches Patentamt
European Patent Office
Office européen des brevets

(11) EP 1 082 328 B1

(12) EUROPÄISCHE PATENTSCHRIFT

(45) Veröffentlichungstag und Bekanntmachung des Hinweises auf die Patenterteilung:
**20.11.2002 Patentblatt 2002/47**

(21) Anmeldenummer: **99926460.9**

(22) Anmeldetag: **28.05.1999**

(51) Int Cl.[7]: **C07F 9/6568**, C07F 15/00, B01J 31/24, C07B 53/00, C07C 45/50 // C07M7:00

(86) Internationale Anmeldenummer:
**PCT/EP99/03702**

(87) Internationale Veröffentlichungsnummer:
**WO 99/062917 (09.12.1999 Gazette 1999/49)**

(54) **HERSTELLUNG OPTISCH AKTIVER PHOSPHOLANE**
PRODUCTION OF OPTICALLY ACTIVE PHOSPHOLANES
PRODUCTION DE PHOSPHOLANES OPTIQUEMENT ACTIFS

(84) Benannte Vertragsstaaten:
**AT BE CH DE DK ES FR GB GR IE IT LI NL PT SE**

(30) Priorität: **29.05.1998 DE 19824121**

(43) Veröffentlichungstag der Anmeldung:
**14.03.2001 Patentblatt 2001/11**

(73) Patentinhaber: **BASF AKTIENGESELLSCHAFT 67056 Ludwigshafen (DE)**

(72) Erfinder:
- **STÜRMER, Rainer D-67127 Rödersheim-Gronau (DE)**
- **BÖRNER, Armin D-18059 Rostock (DE)**
- **HOLZ, Jens D-18057 Rostock (DE)**
- **VOSS, Gudrun D-18055 Rostock (DE)**

(56) Entgegenhaltungen:
**EP-A- 0 889 048**
**WO-A-91/17998**
**WO-A-92/19630**

- **H. BRUNNER: "Asymmetric Calalyses XXXIII. New optically active phospholanes derived from tartaric acid" JOURNAL OF ORGANOMETALLIC CHEMISTRY., Bd. 328, Nr. 1-2, - 14. Juli 1987 (1987-07-14) Seiten 71-80, XP002077949 LAUSANNE CH**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 082 328 B1

## Beschreibung

Die Erfindung beschreibt neue optisch aktive Phospholane und Bis-Phospholane, deren Herstellung und Verwendung als Liganden in Metallkomplexen sowie die Anwendung der Metallkomplexe für die enantioselektive Synthese.

Für die Synthese optisch aktiver Verbindungen spielt die enantioselektive Hydrierung und Isomerisierung mit Rhodium und Rutheniumkomplexen eine grosse Rolle (z.B.Tani et.al. J. Am. Chem Soc 106, 5211, 1984; R. Noyori, Acc. Chem. Res. 23, 345 (1990)). Der stöchiometrische Einsatzstoff Wasserstoff ist billig, allerdings sind die eingesetzten Katalysatoren, die meist aus einem optisch aktiven Diphosphinliganden und einer Rhodium oder Rutheniumverbindung hergestellt werden, sehr teuer und nur aufwendig zugänglich.

Die bekannten Herstellmethoden für optisch aktive Phosphine und Diphosphine sind durchweg komplex und schliessen meist eine technisch aufwendige und teure Racematspaltung ein (z.B. EP-A 0614901; EP-A 0271311; H. B. Kagan, "Chiral Ligands for Asymmetric Catalysis" in Asymmetric Synthesis, Vol. 5 (1985), Seite 13 - 23, EP-A 0151282; EP-A 0185882; R. Noyori, Acc. Chem. Res. 23, 345 (1990); EP- 269395; M.J. Burk, Tetrahedron, Asymmetry, S. 569 - 592 (1991); J. Am. Chem. Soc. 113, S. 8518-9 (1991), ibid. 115, S. 10125-138 (1993), ibid. 117, S. 9375-76 (1995), ibid 118, S. 5142 (1996)). Diese Nachteile machen eine industrielle Nutzung schwierig und unwirtschaftlich.

In J. Organometallic Chem., Bd. 328, Nr. 1-2, Seiten 71-80 werden optisch aktive Phospholanliganden beschrieben, deren Ringe in den Positionen 3 und 4 substituiert sind.

In WO 91/17998 werden optisch aktive Phospholanliganden beschrieben, deren Ringe in den Positionen 2 und 5 als Substituenten niedere Alkyl-, Trifluormethyl-, Phenyl-, Arylalkyl- oder ringsubstituierte Arylalkylgruppen tragen.

Aufgabe der vorliegenden Erfindung war es daher, Phosphinliganden bereitzustellen, die sich leicht und kostengünstig herstellen lassen und die gute Liganden für Metallkomplexkatalysatoren zur enantioselektiven Synthese darstellen.

Es wurde nun gefunden, dass eine besonders effiziente Klasse von Liganden, namentlich Phospholane aus dem "Chiral Pool" zugänglich ist. Das Ausgangsmaterial ist in diesem Fall Mannit und andere Kohlenhydrate, die in grosser Menge billig verfügbar sind.

Die erhaltenen Phospholane und Diphospholane liefern in asymmetrischen Hydrierungen ausgezeichnete Enantiomerenüberschüsse. Bekannt sind die DUPHOS - Liganden von Burk et. al. (M.J. Burk, Tetrahedron, Asymmetry, S. 569 - 592 (1991); J. Am. Chem. Soc. 113, S. 8518 - 9 (1991), ibid. 115, S.10125 - 138 (1993), ibid. 117, S. 9375 - 76 (1995), ibid 118, S. 5142 (1996); US 5,008,457; WO 92/19630; WO 93/19040) die im Gegensatz zur vorliegenden Erfindung sehr viel aufwendiger zu synthetisieren sind. Zur Synthese der DUPHOS-Liganden sind u.a. eine unpraktische elektrolytische Kolbe-Synthese nebst einer asymmetrischen Hydrierung erforderlich.

Die vorliegende Erfindung umgeht diese Schwierigkeiten durch den Einsatz des Zuckers Mannit, der aus natürlichen Quellen enantiomerenrein verfügbar ist. Ferner eröffnet dieses Edukt einen Weg zu Verbindungen, die im Phospholan-Ring in 2- und 5-Stellung Alkoxymethyl- oder Hydroxymethylgruppen tragen. Solche Verbindungen sind mit der bekannten DUPHOS-Synthese nicht herzustellen.

Gegenstand der Erfindung sind Phospholane und Diphospholane der allgemeinen Formel I

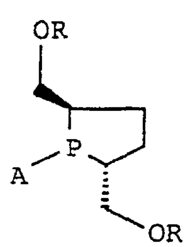

I

wobei:

R H, $C_1$-$C_6$-Alkyl, Aryl, Alkylaryl, $SiR^2_3$,

$R^2$ Alkyl oder Aryl,

A H, $C_1$-$C_6$-Alkyl, Aryl, Cl oder

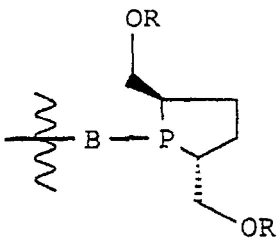

B ein Brückenglied mit 1 - 5 C-Atomen zwischen den beiden P-Atomen bedeuten.

Bevorzugte Substituenten R sind Wasserstoff, Methyl, Ethyl, n-Propyl, Isopropyl, n-Butyl, Isobutyl, tert.Butyl, Benzyl, Trityl und Trialkylsilyl oder Triarylsilyl ($SiR^2_3$ mit $R^2 = C_1$-$C_6$-Alkyl oder Aryl).

Im Falle der Diphospholane sind solche bevorzugt bei denen

B = 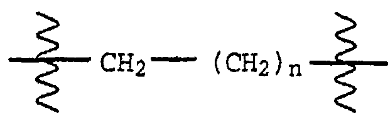

mit n = 0, 1, 2, 3, 4

oder

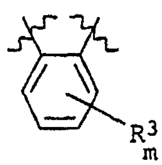

mit m = 0, 1, 2, 3

$R^3$ = Alkyl oder annelliertes Aryl

Besonders bevorzugt sind solche Brückenglieder B bei denen n=1 oder 2 oder m=0 ist.

Ein weiterer Gegenstand der Erfindung sind Metallkomplexe aus den oben genannten Phospholanen mit Zentralatomen aus der Gruppe Rh, Ru, Ir, Pd, Pt, Ni.

Besonders bevorzugte Metallkomplexe sind solche, die als Zentralatom Ruthenium oder Rhodium enthalten.

Diese Komplexe lassen sich herstellen, indem man in bekannter Weise (z.B. Uson, Inorg. Chim. Acta 73, 275 (1983), EP-A 0158875, EP-A 437690) durch Umsetzung mit Rhodium-, Iridium-, Ruthenium-, Palladium-, Platin-; Nikkelkomplexen, die labile Liganden enthalten (z.B. $[RuCl_2(COD)]_n$, $Rh(COD)_2BF_4$, $Rh(COD)_2ClO_4$, $[Ir(COD)Cl]_2$, p-Cymol-Rutheniumchlorid-dimer) katalytisch aktive Komplexe synthetisiert werden.

Ein weiterer Gegenstand der Erfindung ist die Verwendung dieser Metallkomplexe in der asymmetrischen Synthese, insbesondere als Katalysator für Hydrierungen, Hydroformulierungen, Hydrocyanierungen, allylische Substitutionen und Isomerisierungen von Allylaminen zu Enaminen.

Diese Reaktionen können mit den erfindungsgemäßen Metallkomplexen unter dem Fachmann geläufigen Bedingungen durchgeführt werden.

Die Hydrierung mit den erfindungsgemäßen Metallkomplexen wird in der Regel bei einer Temperatur von -20 bis 150°C, bevorzugt bei 0 bis 100°C und besonders bevorzugt bei 15 bis 40°C durchgeführt.

Der wasserstoffdruck kann in einem großen Bereich zwischen 0,1 bar und 300 bar für das erfindungsgemäße Hydrierverfahren variiert werden. Sehr gute Ergebnisse erhält man in einem Druckbereich von 1 bis 10, bevorzugt 1 bis 2 bar.

Besonders vorteilhaft bei den erfindungsgemäßen Liganden ist der niedrige Wasserstoffdruck von 1 bis 2 bar, bei dem die Hydrierungen sehr effizient durchgeführt werden können.

Bevorzugte Lösungsmittel für die Hydrierungen sind $C_1$-$C_4$-Alkanole, insbesondere MeOH. Bei schlecht löslichen Substraten sind auch Lösungsmittelgemische, z.B. Methanol und $CH_2Cl_2$ oder THF, Toluol geeignet.

Der Katalysator wie üblicherweise in Mengen von 0,001 bis 5 mol-%, bevorzugt 0,001 bis 0,01 mol-%, bezogen auf das zu hydrierende Substrat, eingesetzt.

Beispiel 1

Experimenteller Teil

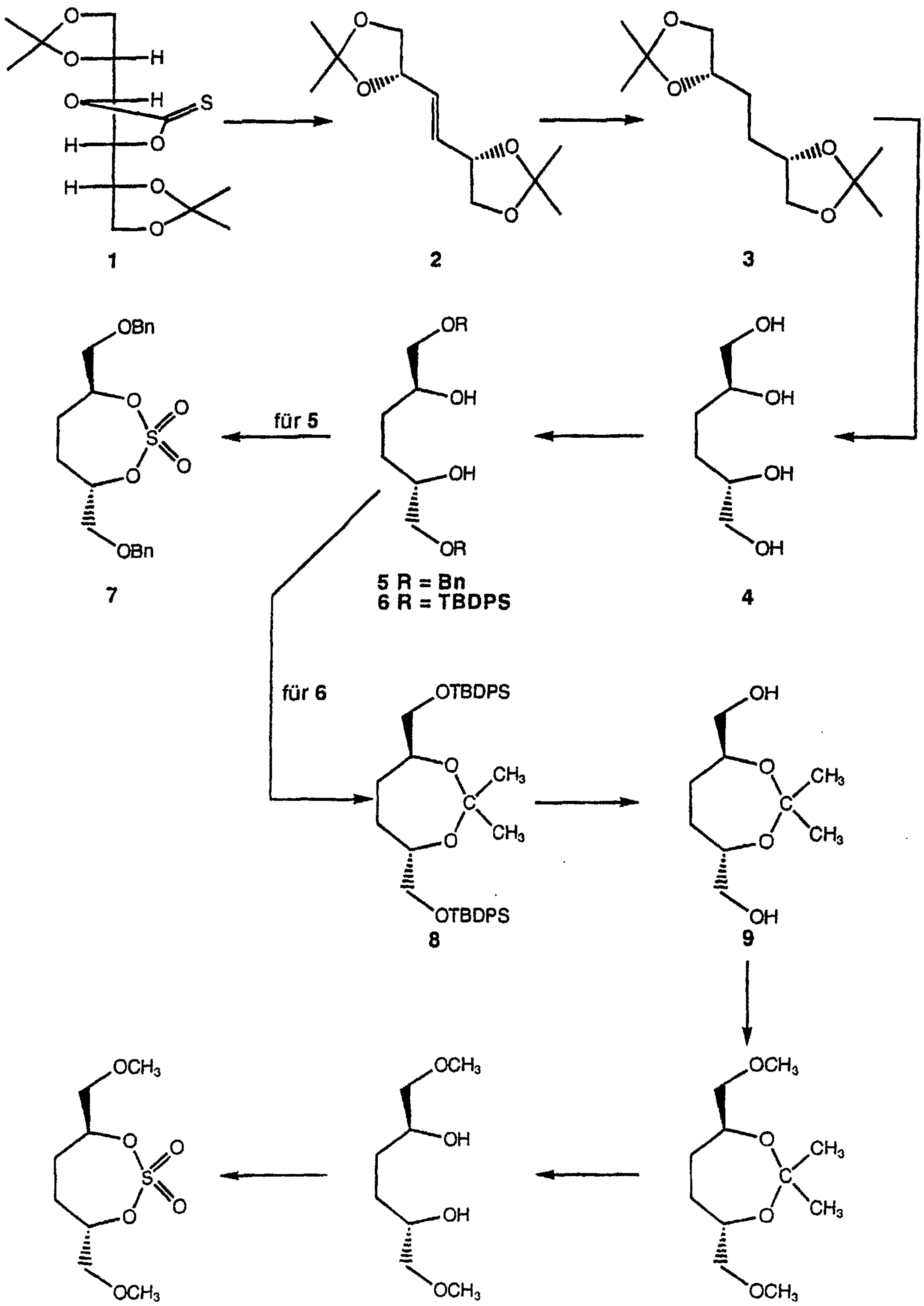


1 2 3

7

5 R = Bn
6 R = TBDPS

4

8

9

12 11 10

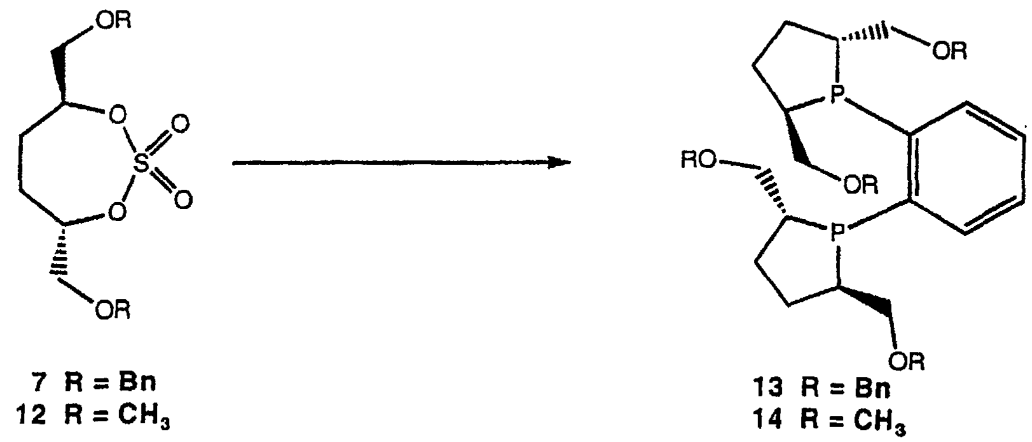

7 R = Bn
12 R = $CH_3$

13 R = Bn
14 R = $CH_3$

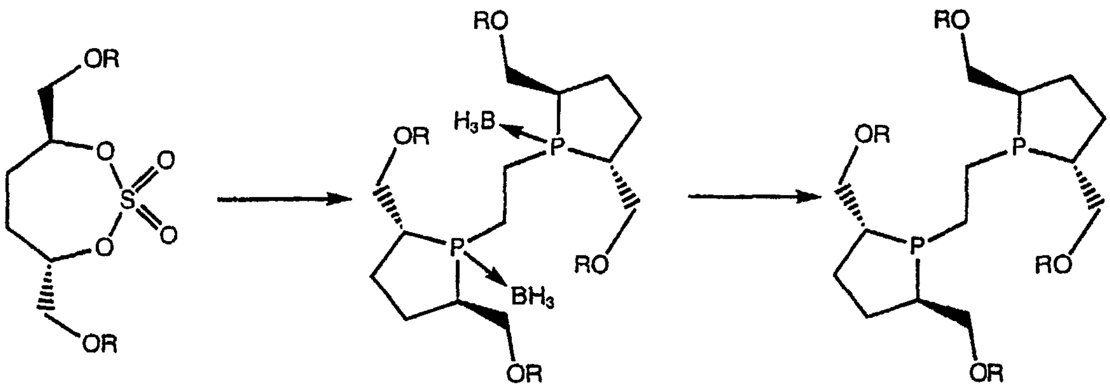

7 R = Bn
12 R = $CH_3$

15 R = Bn
16 R = $CH_3$

17 R = Bn

13, 14, 17 + $[Rh(COD)_2]BF_4$

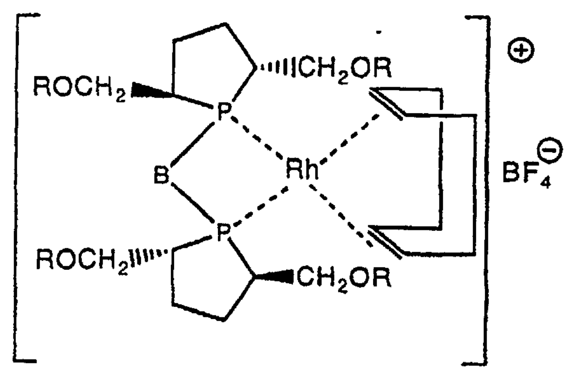

18 R = Bn, B = 1,2-phenylen
19 R = $CH_3$, B = 1,2-phenylen
20 R = Bn, B = ethylen

1,2;5,6-Di-*O*-isopropyliden-3,4-*O*-thiocarbonyl-D-mannitol (1):

Nach der Methode von E.J. Corey et al.[1] wurde das 1,2;5,6-Di-*O*-isopropyliden-D-mannitol mit Thiophosgen in Gegenwart von 4-Dimethylaminopyridin in Methylenchlorid mit 90 %iger Ausbeute umgesetzt.

E-3,4-Didehydro-3,4-didesoxy-1,2;5,6-di-O-isopropyliden-D-threohexitol (2):

Durch 20-stündiges Erhitzen des cyclischen Thiocarbonats 1 in Triethylphosphit nach der Literatur[2,3] konnte das *trans*-Olefin in Ausbeuten von 80 bis 90 % gewonnen werden.

3,4-Didesoxy-1,2;5,6-di-*O*-isopropyliden-D-*threo*-hexitol (3):

In Abwandlung zur Methode von Machinaga et al.[4] wurde das Olefin 2 (10 g) in Methanol mit 10 % Platin auf Aktivkohle (250 mg) bei Normaldruck zur Verbindung 3 hydriert. Nach der säulenchromatographischen Reinigung betrug die Ausbeute 80 bis 90 %. Eine destillative Reinigung von Verbindung **3** nach der Literatur[4] ist ebenfalls möglich (Sdp. 0,6 mm = 73°C).

3,4-Didesoxy-D-*threo*-hexitol (4):

Die saure Hydrolyse der Isopropylidengruppen erfolgte entsprechend der Literatur[4] in 1N Salzsäure. Die Verbindung wurde nach dem Umkristallisieren in einer Ausbeute von 85 % erhalten.

(2*S*,5*S*)-1,6-Bis(benzyloxy)-hexan-2,5-diol (5):

Entsprechend der Vorschrift von Marzi et al.[5] wurden 3,0 g (20 mmol) des 3,4-Didesoxy-D-*threo*-hexitols (4) in 3,70 g des 1,6-di-*O*-benzylierten Produktes 5 in einer Ausbeute von 56 % überführt.

(2*S*,5*S*)-1,6-Bis[(*tert*.-butyldiphenylsilyl)oxy)-hexan-2,5-diol (6):

In Anlehnung an die Literatur[5] wurden 3,0 g (20 mmol) der Verbindung 4 in DMF mit *tert*.-Butyldiphenylchlorsilan in Gegenwart von Imidazol zum Derivat 6 in einer Ausbeute von 80 % umgesetzt.

(4*S*,7*S*)-4,7-Bis(benzyloxymethyl)-2,2-dioxo-[1,3,2]-dioxothiepan (7):

3,30 g (10 mmol) des Diols 5 wurden in 70 ml trockenem Tetrachlorkohlenstoff unter Argonatmosphäre mit 1,43 g (12 mmol) Thionylchlorid langsam versetzt und anschließend 90 Minuten unter Rückfluß erhitzt. Nach dem Entfernen des Lösungsmittels am Rotationsverdampfer wurde der Rückstand mit einer Mischung von Tetrachlorkohlenstoff (40 ml), Acetonitril (40 ml) und Wasser (60 ml) aufgenommen und bei 0°C mit 15 mg (72 μmol) $RuCl_3 {*} 3H_2O$ und 4,28 g (20 mmol) Natriumperiodat versetzt. Man ließ dann eine Stunde bei Raumtemperatur rühren und versetzte dann die Suspension mit 50 ml Wasser. Durch anschließende Extraktion mit Diethylether (3 x 75 ml) und Waschen der organischen Phase mit gesättigter NaCl-Lösung (100 ml) erhielt man nach dem Trocknen ($Na_2SO_4$) einen Rückstand, welcher säulenchromatographisch (n-Hexan:AcOEt = 2:1, $R_f$ = 0.20) die Verbindung 7 in einer Ausbeute von 3.37 g (86 %) lieferte.
Smp. = 57 bis 59°C; $[\alpha]_D^{26}$ = -37,2° (*c* 1.01; $CHCl_3$); $^1$H-NMR ($CDCl_3$, 400 MHz) δ 7,34 (10H, m, arom. H), 4,78 (2H, m, H-2/5), 4,57 (2H, AB-Sp., $H_a$-$CH_2Ph$, $^2J_{a,b}$= 12,0 Hz), 4,56 (2H, AB-Sp., $H_b$-$CH_2Ph$, $^2J_{a,b}$ = 12.0 Hz), 3,65 (2H, dd, $H_a$-$CH_2OH$, $^2J_{a,b}$ = 10,8 Hz, $^3J_{H,H}$ = 5,4 Hz), 3,56 (2H, dd, $H_b$-$CH_2OH$, $^2J_{a,b}$ = 10,8 Hz, $^3J_{H,H}$ = 4.9 Hz), 2,00 (4H, m, H-3/4); $^{13}$C-NMR ($CDCl_3$, 100 MHz) δ 137,3, 128,4-127.7 (arom. C), 82,6 (C-2/5), 73,4 ($CH_2Ph$), 70,8 (C-1/6), 28,9 (C-3/4); Elementaranalyse $C_{20}H_{24}O_6S$ (392,47) ber.: C 61,21, H 6,16, S 8,17; gef.: C 61,03, H 6,19, S 8,10;

1,6-Di-*O*-(*tert*.-butyldiphenyl)silyl-2,5-di-*O*-isopropyliden-3,4-didesoxy-D-*threo*-hexitol (8):

Entsprechend der Literatur[5] wurden 6,27 g (10 mmol) der Verbindung 6 in einer Ausbeute von 85 % (5,67 g) zum Isopropyliden-Derivat 8 umgesetzt. Die Reinigung von 8 zur Charakterisierung erfolgte durch Säulenchromatographie (*n*-Hexan: Diethylether = 19:1, $R_f$ = 0.2). Für den nächsten Reaktionsschritt konnte auf eine Reinigung der Verbindung verzichtet werden.

2,5-Di-*O*-isopropyliden-3,4-didesoxy-D-*threo*-hexitol (9):

Aus 6,67 g (10 mmol) der Silylverbindung 8 wurden nach der Abspaltung der Silylgruppen mit Tetrabutylammoniumfluorid in THF[5] und der anschließenden chromatographierte Reinigung (Diethylether:MeOH = 19:1, $R_f$ = 0,5) 1,7 g (89 %) des Diols 9 erhalten.

2,5-Di-*O*-isopropyliden-1,6-di-*O*-methyl-3,4-didesoxy-D-*threo*hexitol (10):

Eine Lösung von 3,80 g (20 mmol) des Diols 9 in 30 ml THF wurden bei 0°C zu einer Lösung von 1,06 g (44 mmol) NaH in 60 ml THF gegeben. Nach Beendigung der Alkoholatbildung addierte mn langsam 2,2 Äquivalente Methyliodid (6,21 g, 44 mmol) hinzu und ließ bei Raumtemperatur rühren. Nach Abschluß der Reaktion vernichtete man den Überschuß von NaH vorsichtig mit Wasser (30 ml) und entfernte unter Vakuum das THF. Die verbleibende wäßrige Lösung wurde dann mit Methylenchlorid (3 x 50 ml) extrahiert und die vereinigte organischen Phase getrocknet ($Na_2SO_4$). Der nach dem Einengen erhaltene Rückstand lieferte nach der Säulenchromatographie (*n*-Hexan:AcOEt = 2:1, $R_f$ = 0.40) einen farblosen Sirup in einer Ausbeute von 84 % (3,68 g).
Sirup; $[\alpha]_D^{23}$ = -32,8° (c 1,01, $CHCl_3$); $^1$H-NMR ($CDCl_3$, 400 MHz) δ 3,92 (2H, m, H-2/5), 3,32 (2H, dd, $H_a$-$CH_2O$, $^2J_{a,b}$ = 9,9 Hz, $^3J_{H,H}$ = 6,3 Hz), 3,30 (6H, s, $CH_3$), 3,55 (2H, m, $H_b$-$CH_2O$, $^2J_{a,b}$ = 9,9 Hz, $^3J_{H,H}$ = 5,3 Hz), 1,67 (2H, m, $H_a$-3/4), 1,34 (2H, m, $H_b$-3/4), 1,31 (6H, s, $CH_3$); $^{13}$C-NMR ($CDCl_3$, 100 MHz) δ 100,5 ($C(O)_2$), 76,2 (C-1/6), 70,4 (C-2/5), 59,1 ($CH_3$), 31,1 (C-3/4), 25,6 ($C(CH_3)_2$); Elementaranalyse $C_{11}H_{22}O_4$ (218.293) ber.: C 60,52, H 10,16; gef.: C 60,38, H 10,07;

(2*S*,5*S*)-1,6-Bis(benzyloxy)-hexan-2,5-diol (11):

4,0 g (18,32 mmol) der Verbindung 10 wurden in einer Mischung von 60 ml THF und 60 ml 1N Salzsäure innerhalb von 20 Minuten hydrolysiert. Nach dem Einengen der Lösung am Rotationsverdampfer wurden auf chromatographischem Weg (EtOH:AcOEt = 1:3, $R_f$ = 0,45) in nahezu quantitativer Ausbeute 3,20 g eines schwach gelben Sirups 11 erhalten.
Sirup; $[\alpha]_D^{22}$ = -7,2° (*c* 1,09, $CH_3OH$) ; $^1$H-NMR ($CD_3OD$, 400 MHz) δ 3,72 (2H, m, H-2/5), 3,37 (6H, s, $CH_3$), 3,38-3,30 (4H, m, $CH_2OH$), 1,56 (4H, m, H-3/4); $^{13}$C-NMR ($CD_3OD$, 100 MHz) δ 78,2 (C-1/6), 70,1 (C-2/5), 59,2 ($CH_3$), 30,6 (C-3/4); Elementaranalyse $C_8H_{18}O_4$ (178.228) ber.: C 53,91, H 10,18; gef.: C 53,47, H 10,14;

(4*S*,7*S*)-4,7-Bis(methyloxymethyl)-2,2-dioxo-[1,3,2]-dioxothiepan (12):

In Analogie zur Darstellung des cyclischen Sulfats 7 wurden 1,78 g (10 mmol) des Diols 11 in die Zielverbindung 12 überführt. Auf eine chromatographische Reinigung (*n*-Hexan:AcOEt = 1:2, $R_f$ = 0,4) konnte hier verzichtet werden, denn das Produkt 12 ließ sich durch Kristallisation aus Diethylether/*n*-Hexan in einer Ausbeute von 76 % (1,83 g) als weißer Feststoff isolieren.
Smp. = 75-78°C; $[\alpha]_D^{23}$ = -44,1° (*c* 1,01; $CHCl_3$); $^1$H-NMR ($CDCl_3$, 400 MHz) δ 4,72 (2H, m, H-2/5), 3,56 (2H, dd, $H_a$-$CH_2O$, $^2J_{a,b}$= 10,8 Hz, $^3J_{H,H}$ = 5,4 Hz), 3,47 (2H, dd, $H_a$-$CH_2O$, $^2J_{a,b}$ = 10,8 Hz, $^3J_{H,H}$ = 4,7 Hz), 3,37 (6H, s, $CH_3$), 2,04-1,92 (4H, m, H-3/4); $^{13}$C-NMR ($CDCl_3$, 100 MHz) δ 82,5 (C-2/5), 73,4 (C-1/6), 59,3 ($OCH_3$), 28,8 (C-3/4); Elementaranalyse $C_8H_{16}O_6S$ (240.274) ber.: C 39,99, H 6,71, S 13,34; gef.: C 40,06, H 6,76, S 1, .27;

1,2-Bis[(2*R*,5*R*)-2,5-benzyloxymethylphospholanyl]benzen (13):

0,52 g (3,66 mmol) 1,2-Bis(phosphanyl)benzen in 50 ml THF wurden mit 2,0 Äquivalenten *n*-BuLi (4,58 ml, 1,6 M Lösung in *n*-Hexan) langsam versetzt und nach zwei Stunden gab man zu der resultierenden gelben Lösung langsam 2,86 g (7,32 mmol) des cyclischen Sulfats 7 in 20 ml THF hinzu. Man ließ weitere 2 Stunden bei Raumtemperatur rühren und addierte schließlich erneut 2,2 Äquivalente *n*-BuLi (5,03 ml, 1,6 M Lösung in *n*-Hexan) hinzu. Die Lösung ließ man über Nacht rühren und vernichteden Überschuß an BuLi schließlich mit 2 ml MeOH. Das Lösungsmittel wurde unter Vakuum entfernt und der Rückstand unter anaeroben Bedingungen mit 20 ml Wasser aufgenommen und dann mit Methylenchlorid (2 x 50 ml) extrahiert. Nach dem Trocknen der organischen Phase ($Na_2SO_4$) und Entfernen des Solvens isolierte man das gewünschte Produkt durch Säulenchromatographie (*n*-Hexan:AcOEt = 4:1, $R_f$ = 0,35) in einer Ausbeute von 0,52 g (19 %) als schwach-gelben Sirup.
Sirup; $^1$H-NMR ($CDCl_3$, 400 MHz) δ 7,45-7,10 (24H, m, arom. H), 4,49 (2H, AB-Sp., $H_a$-$CH_2Ph$, $^2J_{a,b}$ = 12.1 Hz), 4,47 (2H, AB-Sp., $H_b$-$CH_2Ph$, $^2J_{a,b}$ = 12,1 Hz), 4,18 (2H, AB-Sp., $H_a$-$CH_2Ph$, $^2J_{a,b}$ = 11,9 Hz), 4,04 (2H, AB-Sp., $H_b$-$CH_2Ph$, $^2J_{a,b}$ = 11,9 Hz), 3,65-3,45 (4H, m, $CH_2O$), 2.97-2.80 (4H, m, $CH_2O$), 2.70 (2H, m, CH-P); 2.33 (4H, m, CH-P, $H_a$-$(CH_2)_2$); 2,18 (2H, m, $H_a$-$(CH_2)_2$), 1,80-1,53 (4H, m, $H_b$-$(CH_2)_2$); $^{13}$C-NMR ($CDCl_3$, 100 MHz) δ 141,8 (m, $C_{ar}$-P), 138,6+138,5 (*ipso*-C), 131,8, 128,4-127,1 (arom. C), 74,1 (m, $CH_2Ph$), 73,0 ($CH_2Ph$), 72,5 ($CH_2O$), 72,5 ($CH_2O$), 39,5 (CH-P), 38,9 (m, CH-P), 30,9 ($CH_2$), 30,4 ($CH_2$); $^{31}$P-NMR ($CDCl_3$, 162 MHz) δ 11,5;

1,2-Bis[(2*R*,5*R*)-2,5-methyloxymethylphospholanyl]benzen (14) :

Analog zur Darstellung von Bisphospholan 13 wurde an Stelle des cyclischen Sulfats 7 die Verbindung 12 zum gewünschten Methoxymethyl-substituierten Bisphospholan 14 umgesetzt. Die Reinigung und Isolierung erfolgte

durch Säulenchromatographie (*n*-Hexan: AcOEt = 2:1, $R_f$ = 0,20) in einer Ausbeute von 0,80 g (48 %) des farblosen Sirups.

Sirup; $^1$H-NMR ($CDCl_3$, 400 MHz) δ 7,45 (2H, m, arom. H), 7,30 (2H, m, arom. H), 3,55 (4H, m, $CH_2O$), 3,36 (2H, m, $CH_2O$), 3,35 (6H, s, $CH_3$), 3,10 (6H, s, $CH_3$), 2,90 (2H, m, $CH_2O$), 2,78 (2H, m, CH-P), 2,63 (2H, m, CH-P), 2,32 (2H, m, $CH_2$); 2,16 (4H, m, $CH_2$); 1,68 (2H, m, $CH_2$), 1,55 (4H, m, $CH_2$); $^{13}$C-NMR ($CDCl_3$, 100 MHz) δ 141,9 (m, $C_{ar}$-P), 131,8, 128,4 (arom. C), 74,1 (m, $CH_2Ph$), 76,6 (m, $CH_2O$), 74,5 ($CH_2O$), 58,8 ($CH_3$), 58,2 ($CH_3$), 39,6 (CH-P), 39,0 (m, CH-P), 30,9 ($CH_2$), 30,3 ($CH_2$); $^{31}$P-NMR ($CDCl_3$, 162 MHz) δ -11,7;

1,2-Bis[(2*R*,5*R*)-2,5-benzyloxymethylphospholanyl]ethan Borankomplex (15):

348 mg (3,70 mmol) Bis(phosphanyl)ethan wurden bei Raumtemperatur in THF mit 7,40 mmol (4,63 ml) einer 1,6 M *n*-BuLi-Lösung in Hexan versetzt und zwei Stunden gerührt. Dann gab man langsam eine Lösung von 2,90 g (7,40 mmol) des cyclischen Sulfats 7 in 20 ml THF hinzu und rührte weitere zwei Stunden. Durch anschließende Zugabe weiterer 5,09 ml (8,14 mmol) *n*-BuLi-Lösung wurde die Reaktion komplettiert und über Nacht gerührt. Zur Bildung des Boran-Adduktes kühlte man die Lösung auf -20°C ab und gab 9,25 ml (9,25 mmol) einer 1M $BH_3$*THF-Lösung hinzu. Nach zwei Stunden vernichtete man überschüssiges BuLi und $BH_3$ durch Zugabe von 2 ml MeOH und entfernte das Lösungsmittel unter Vakuum. Der Rückstand wurde mit Wasser aufgenommen und dann mit Methylenchlorid extrahiert. Die Extrakte wurden dann getrocknet ($Na_2SO_4$) und eingeengt und der verbleibende Rückstand säulenchromatographisch (*n*-Hexan: AcOEt = 4:1, $R_f$ = 0,20) gereinigt. Man erhielt 350 mg (13 %) eines zähflüssigen Sirups.

Sirup; $^1$H-NMR ($CDCl_3$, 400 MHz) δ 7,37-7,22 (20H, m, arom. H), 4,47 (2H, AB-Sp., $H_a$-$CH_2Ph$, $^2J_{a,b}$ = 11,2 Hz), 4,42 (2H, AB-Sp., $H_a$-$CH_2Ph$, $^2J_{a,b}$ = 12,1 Hz), 4,41 (2H, AB-Sp., $H_b$-$CH_2Ph$, $^2J_{a,b}$ = 12,1 Hz), 4, 38 (2H, AB-Sp., $H_b$-$CH_2Ph$, $^2J_{a,b}$ = 11,2 Hz), 3,58 (4H, m, $CH_2O$), 3,43 (4H, m, $CH_2O$), 2,37 (2H, m, CH-P) ; 2,14-1,79 (10H, m, CH-P, $(CH_2)_2$), 1,41-1,20 (2H, m, $(CH_2)_2$), 0,85-0,00 (6H, m, $BH_3$); $^{13}$C-NMR ($CDCl_3$, 100 MHz) δ 138,1+137,9 (*ipso*-C), 128,3-127,4 (arom. C), 73,2 ($CH_2Ph$), 72,7 ($CH_2Ph$), 69,4 ($CH_2O$), 68,4 ($CH_2O$), 39,5 (m, CH-P), 29,1 ($CH_2$), 28,6 ($CH_2$), 15,9 (m, $CH_2)_2$); $^{31}$P-NMR ($CDCl_3$, 162 MHz) δ 40,2;

1,2-Bis[(2*R*,5*R*)-2,5-methyloxymethylphospholanyl]ethan Borankomplex (16):

In Analogie zur Darstellung der Verbindung 15 wurden 2,14 g (8,91 mmol) cyclisches Sulfat 12 und 0,42 g (4,45 mmol) Bis(phosphanyl)ethan zum gewünschten borangeschützten Bisphospholan 16 umgesetzt. Die chromatographische Reinigung erfolgte mit *n*-Hexan:AcOEt = 2:1 ($R_f$ = 0,15). Man erhielt ein kristallines Produkt in einer Ausbeute von 0,71 g (39 %).

Smp.= 45-48°C; $[\alpha]_D^{23}$ = 21,9° (*c* 1.00; $CHCl_3$); $^1$H-NMR ($CDCl_3$, 400 MHz) δ 3,51 (8H, m, $CH_2O$), 3,33 (6H, s, $CH_3O$), 3,32 (6H, m, $CH_3O$), 2,36 (2H, m, CH-P); 2,23-2,05 (6H, m, CH-P, $(CH_2)_2$), 1,96 (4H, m, $CH_2)_2$), 1,58-1,35 (4H, m, $(CH_2)_2$), 0,95-0,00 (6H, m, $BH_3$); $^{13}$C-NMR ($CDCl_3$, 100 MHz) δ 71,6 (m, $CH_2O$), 70,8 ($CH_2O$), 58,7 ($CH_3O$), 58,7 ($CH_3O$), 39,5 (m, CH-P), 29,1 ($CH_2$), 28,9 ($CH_2$), 15,8 (m, $CH_2)_2$); $^{31}$P-NMR ($CDCl_3$, 162 MHz): δ 40,5; MS (m/z; EI) 391 [$M^+$-$BH_4$] (100);

1,2-Bis[(2*R*,5*R*)-2,5-methyloxymethylphospholanyl]ethan (17):

0,30 g (0,42 mmol) des Boran-Komplex 15 wurden mit einer aneoroben Lösung von 0,142 g (1,26 mmol) DABCO in 6 ml Toluol versetzt und bei 40°C gerührt. Nach Vollständigkeit der Reaktion wurde die Lösung eingeengt und rasch säulenchromatographisch gereinigt (*n*-Hexan:AcOEt = 4:1, $R_f$= 0.55). Das Bisphospholan 17 wurde in einer Ausbeute von 0,21 g (73 %) erhalten und sofort zur Komplexbildung eingesetzt.

Sirup; $^1$H-NMR ($CDCl_3$, 400 MHz) δ 7,35-7,21 (20H, m, arom. H), 4,52 (2H, AB-Sp., $H_a$-$CH_2Ph$, $^2J_{a,b}$ = 12,1 Hz), 4,48 (2H, AB-Sp., $H_b$-$CH_2Ph$, $^2J_{a,b}$ = 12,1 Hz), 4,43 (2H, AB-Sp., $H_a$-$CH_2Ph$, $^2J_{a,b}$ = 12,1 Hz), 4,41 (2H, AB-Sp., $H_b$-$CH_2Ph$, $^2J_{a,b}$ = 12,1 Hz), 3,61-3,41 (8H, m, $CH_2O$), 2,29 (2H, m, CH-P) ; 2,20 (2H, m, CH-P); 2,07 (4H, m, $H_a$-$(CH_2)_2$), 1,53-1,23 (8H, m, $H_b$-$(CH_2)_2$), $(CH_2)_2$); $^{13}$C-NMR ($CDCl_3$, 100 MHz) δ 138,6+138,4 (*ipso*-C), 128,3-127,3 (arom. C), 74,2 (m, $CH_2Ph$), 72,9 ($CH_2Ph$), 72,7 ($CH_2O$), 70,2 ($CH_2O$), 43,7 (m, CH-P), 40,0 (m, CH-P), 31,4 ($CH_2$), 31,3 ($CH_2$), 19,1 (m, $CH_2)_2$); $^{31}$P-NMR ($CDCl_3$, 162 MHz): δ -6,9;

Darstellung der [Rh(COD) (P-P)]$BF_4$-Komplexe 18, 19 und 20:

0,3 mmol der Bisphospholan-Liganden 13, 14 und 17 wurden in 1,5 ml THF gelöst und langsam bei einer Temperatur von -10°C zu einer Suspension von 0,122 g (0,3 mmol) $[Rh(COD)_2]BF_4$ in 3,5 ml THF gegeben. Nach ca. 10 Minuten wurde die Lösung unter anaeroben Bedingungen von ungelösten Bestandteilen abfiltriert und mit 15 ml Diethylether versetzt. Dabei schied sich ein oranger Niederschlag oder auch ein braunes Öl ab. Dekantieren der überstehenden Lösung und zweimaliges Waschen mit Diethylether (5 ml) lieferte nach dem Trocknen unter Vakuum

ein oranges Pulver in NMR-spektroskopisch reiner Form.

[Rh(COD)(13)]$BF_4$ (18): Ausbeute 225 mg (73 %); $^1$H-NMR ($CDCl_3$, 400 MHz) δ 7,70-6,80 (24H, m, arom. H), 5,76 (2H, m, $CH_{COD}$), 4,66 (2H, m, $CH_{COD}$), 4,42 (2H, AB-Sp., $H_a$-$CH_2$Ph, $^2J_{a,b}$ = 12,3 Hz), 4,18 (2H, AB-Sp., $H_b$-$CH_2$Ph, $^2J_{a,b}$ = 12,3 Hz), 4,05 (2H, AB-Sp., $H_a$-$CH_2$Ph, $^2J_{a,b}$ = 12 9 Hz), 4 05 (2H, AB-Sp., $H_b$-$CH_2$Ph, $^2J_{a,b}$ = 12, 9 Hz), 3,80 (2H, m, $CH_2O$), 3,60 (4H, m, $CH_2O$), 3,30 (2H, m, $CH_2O$), 2,87-1,50 (20H, m, 4xCH-P, 4x$(CH_2)_2$); $^{13}$C-NMR ($CDCl_3$, 100 MHz) δ 140,5 (m, $C_{ar}$-P), 137,7+137,0 (*ipso*-C), 132,3, 128,5-127,3 (arom. C), 107,0 ($CH_{COD}$), 91,9 ($CH_{COD}$), 73,2 (m, $CH_2$Ph), 73,0 ($CH_2$Ph), 70,6 (m, $CH_2O$), 68,1 ($CH_2O$), 49,7 (m, CH-P), 42,7 (m, CH-P), 33,7 ($CH_2$), 32,1 ($CH_2$), 31,3 ($CH_2$), 27,0 ($CH_2$); $^{31}$P-NMR ($CDCl_3$, 162 MHz) : δ 64,3 ($^1J_{Rh,P}$ = 150 Hz); MS (m/z; $FAB_{pos}$) 941 [$M^+$-$BF_4$] (20), 833 [$M^+$-$BF_4$-COD] (100);

[Rh(COD)(14)]$BF_4$ (19): Ausbeute 155 mg (71 %); $^1$H-NMR ($CDCl_3$, 400 MHz) δ 7,74 (2H, m, arom. H), 7,68 (2H, m, arom. H), 5,57 (2H, m, $CH_{COD}$), 4,80 (2H, m, $CH_{COD}$), 3,82 (2H, m, $CH_2$), 3,67 (2H, m, $CH_2$), 3,50 (2H, m, $CH_2$), 3,26 (6H, s, $CH_3O$), 3,13 (2H, m, $CH_2$), 2,90 (2H, m, CH-P), 2,85 (6H, s, $CH_3O$), 2,67-2,27 (14 H, m, CH-P, $(CH_2)_2$), 1,94 (2H, m, $(CH_2)_2$), 1,58 (2H, m, $(CH_2)_2$);$^{13}$C-NMR ($CDCl_3$, 100 MHz) δ 140,2 (m, $C_{ar}$-P), 132,4-132,0 (arom. C), 106,1 (m, $CH_{COD}$), 90,8 (m, $CH_{COD}$), 73,7 (m, $CH_2O$), 70,8 ($CH_2O$), 58,8+58,7 ($CH_3O$), 49,4+42,5 (m, CH-P), 33,5+31,9 +31,2+27,6 ($CH_2$); $^{31}$P-NMR ($CDCl_3$, 162 MHz): δ 65,0 ($^1J_{Rh,P}$ = 150 Hz) ;

[Rh(COD)(17)]$BF_4$ (20): Ausbeute 190 mg (65 %); $^1$H-NMR ($CDCl_3$, 400 MHz) δ 7,30-7,05 (20H, m, arom. H), 5,55 (2H, m, $CH_{COD}$), 4,58 (2H, m, $CH_{COD}$), 4,43-4,20 (8H, m, $CH_2$Ph, 3,77-3,40 (8H, m, $CH_2O$), 2,50-1,90 (20H, m, CH-P, $(CH_2)_2$); 1,60-1,20 (4H, m, $(CH_2)_2$); $^{13}$C-NMR ($CDCl_3$, 100 MHz) δ 137,9+137,7 (*ipso*-C), 128,5-127,2 (arom. C), 102,1 ($CH_{COD}$), 91,5 ($CH_{COD}$), 73,4+72,1 ($CH_2$Ph), 72,8 ($CH_2O$), 68,8 ($CH_2O$), 45,2+39,2 (m, CH-P), 32,7 ($CH_2$), 31,3 ($CH_2$), 30,0 ($CH_2$), 27,7 ($CH_2$) 20,8 (m, $CH_2)_2$); $^{31}$P-NMR ($CDCl_3$, 162 MHz): δ 7.3 ($^1J_{Rh,P}$ = 147 Hz);

Literatur

1 E.J. Corey; P.B. Hopkins *Tetrahedron Lett.* 23 (1982) 1979-1982;

2 M. Marzi; D. Misiti *Tetrahedron Lett.* 30 (1989) 6075-6076;

3 A. Haines *Carbohydrate Res.* 1 (1965) 214-228;

4 N. Machinaga; C. Kibayashi *J. Org. Chem.* 57 (1992) 5178-5189;

5 M. Marzi; P. Minetti; D. Misiti *Tetrahedron* 48 (1992) 10127-10132;

Ergebnisse der asymmetrischen Hydrierung von prochiralen Substraten

Bedingungen: Substrat : Katalysator = 100:1, MeOH, 25°C, 1 bar $H_2$;

| | 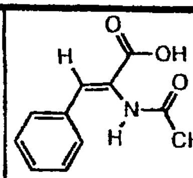 | | 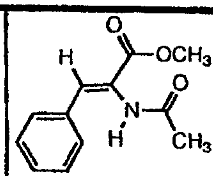 | | 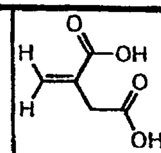 | | 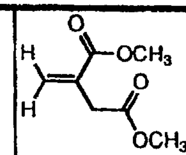 | | 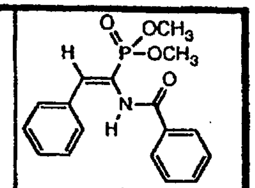 | |
|---|---|---|---|---|---|---|---|---|---|---|
| | $t_{100}$ | %ee | $t_{100}$ | %ee | $t_{100}$ | %ee | $t_{100}$ | %ee | $t_{100}$ | %ee |
| 18 | n.b. | 73.8 (S) | n.b. | 72.2 (S) | 3 h (98%) | 75.0 (R) | 7 h (27%) | 9.2 (S) | 48 h | 20.8 (R) |
| 19 | 19 min | 94.8 (S) | 15 min | 98.9 (S) | 20 min | 96.9 (R) | 3 h | 97.2 (R) | 4 h | 78.8 (R) |
| 20 | 250 min | 91.5 (S) | 5 h | 95.6 (S) | 17 h (94%) | 81.5 (R) | 19 h (63%) | 73.1 (R) | 7 h | 71.9 (R) |

## Patentansprüche

1. Phospholane und Diphospholane der allgemeinen Formel I

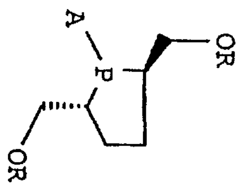

I

wobei:

R H, $C_1$-$C_6$-Alkyl, Aryl, Alkylaryl, $SiR^2_3$ ,

$R^2$ Alkyl oder Aryl,

A H, $C_1$-$C_6$-Alkyl, Aryl, Cl oder

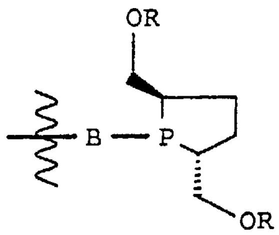

B ein Brückenglied mit 1 - 5 C-Atomen zwischen den beiden P-Atomen bedeuten.

2. Phospholane nach Anspruch 1 wobei R = H oder $CH_3$ bedeutet.

3. Diphospholane nach Anspruch 1, **dadurch gekennzeichnet, daß** die Substituenten die folgende Bedeutung besitzen:

B = 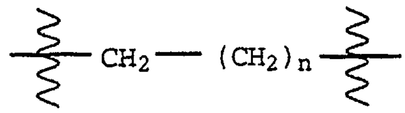

mit n = 0, 1, 2, 3, 4
oder

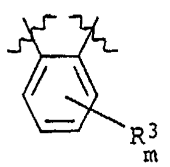

mit m = 0, 1, 2, 3
$R^3$ = Alkyl oder annelliertes Aryl

4. Diphospholane nach Anspruch 3, **dadurch gekennzeichnet, daß** die Substituenten die folgende Bedeutung besitzen:
m=0, n=1.

5. Metallkomplexe aus Phospholanen gemäß einem der Ansprüche 1 bis 4 und einem Zentralatom ausgewählt aus der Gruppe Rh, Ru, Ir, Pd, Pt, Ni.

6. Metallkomplexe nach Anspruch 5, **dadurch gekennzeichnet daß** als Zentralatom Rh oder Ru ausgewählt ist.

7. Verwendung von Metallkomplexen gemäß Anspruch 5 bis 6 zur asymmetrischen Hydrierung, Hydroformylierung, Hydrocyanierung, allylischen Substitution, Isomerisierung von Allylaminen zu Enaminen.

**8.** Verfahren zur asymmetrischen Hydrierung von Verbindungen indem man die zu hydrierenden Ausgangsverbindungen mit Wasserstoff in Gegenwart der Metallkomplexe gemäß Anspruch 5 bis 6 umsetzt.

**9.** Verfahren nach Anspruch 8, **dadurch gekennzeichnet, daß** die Hydrierung bei einem Wasserstoffdruck von 1 bis 2 bar ausgeführt wird.

**Claims**

**1.** A phospholane or diphospholane of the general formula I

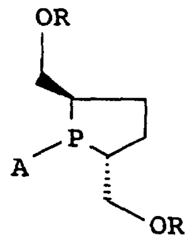

I

where:

R is H, $C_1$-$C_6$-alkyl, aryl, alkylaryl, $SiR^2_3$ ,

$R^2$ is alkyl or aryl,

A is H, $C_1$-$C_6$-alkyl, aryl, Cl or

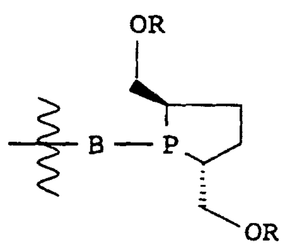

B is a linker with 1 - 5 C atoms between the two P atoms.

**2.** A phospholane as claimed in claim 1, where R is H or $CH_3$.

**3.** A diphospholane as claimed in claim 1, wherein the substituents have the following meaning:

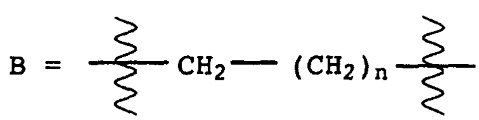

with n = 0, 1, 2, 3, 4
or

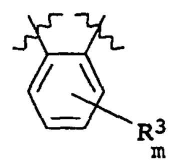

with m = 0, 1, 2, 3

$R^3$ = alkyl or fused aryl

**4.** A diphospholane as claimed in claim 3, wherein the substituents have the following meaning: m=0, n=1.

**5.** A metal complex comprising a phospholane as claimed in any of claims 1 to 4 and a central atom selected from the group of Rh, Ru, Ir, Pd, Pt, Ni.

**6.** A metal complex as claimed in claim 5, wherein Rh or Ru is selected as central atom.

**7.** The use of a metal complex as claimed in claim 5 or 6 for the asymmetric hydrogenation, hydroformylation, hydrocyanation, allylic substitution, isomerization of allylamines to enamines.

**8.** A process for the asymmetric hydrogenation of compounds by reacting the starting compounds to be hydrogenated with hydrogen in the presence of a metal complex as claimed in claim 5 or 6.

**9.** A process as claimed in claim 8, wherein the hydrogenation is carried out under a pressure of from 1 to 2 bar of hydrogen.

## Revendications

**1.** Phospholanes et diphospholanes de formule générale I

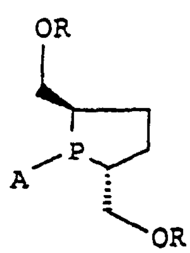

I

dans laquelle

- R représente l'hydrogène, un groupe alkyle en C1-C6, aryle, alkylaryle, $SiR^2_3$ ,
- $R^2$ représente un groupe alkyle ou aryle,
- A représente H , un groupe alkyle en C1-C6, aryle, le chlore ou

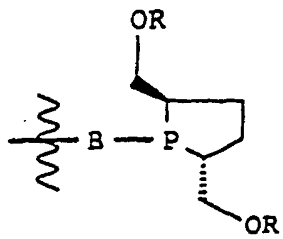

B représente un pont en C1-C5 entre les deux atomes de phosphore.

**2.** Phospholanes selon la revendication 1, pour lesquels R = H ou $CH_3$.

**3.** Diphospholanes selon la revendication 1, **caractérisés par le fait que** les symboles des formules ont les significations suivantes :

B = 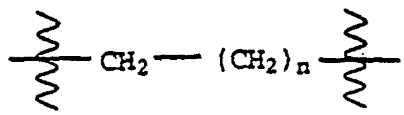

avec n = 0, 1, 2, 3, 4

ou

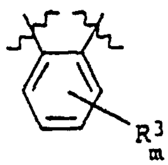

avec m = 0, 1, 2, 3

$R^3$ = alkyle ou aryle condensé

**4.** Diphospholanes selon la revendication 3, **caractérisés par le fait que** les symboles ont les significations suivantes :
m=0, n=1.

**5.** Complexes métalliques consistant en phospholanes selon l'une des revendications 1 à 4 et un atome central choisi parmi Rh, Ru, Ir, Pd, Pt, Ni.

**6.** Complexes métalliques selon la revendication 5, **caractérisés par le fait que** l'atome central est Rh ou Ru.

**7.** Utilisation des complexes métalliques selon l'une des revendications 5 à 6 pour l'hydrogénation asymétrique, l'hydroformylation, l'hydrocyanation la substitution allylique, l'isomérisation d'allylamines en énamines.

**8.** Procédé pour l'hydrogénation asymétrique de composés, consistant à traiter les composés à hydrogéner par l'hydrogène en présence des complexes métalliques selon l'une des revendications 5 à 6.

**9.** Procédé selon la revendication 8, **caractérisé par le fait que** l'hydrogénation est réalisée sous une pression d'hydrogène de 1 à 2 bar.